# EUROPÄISCHE PATENTSCHRIFT

(11) **EP 0 907 590 B1**
(45) Veröffentlichungstag und Bekanntmachung des Hinweises auf die Patenterteilung: **29.11.2000**
(21) Anmeldenummer: 97923957.1
(22) Anmeldetag: 21.05.1997
(51) Int. Cl.: B65G 15/00, B65G 15/28, B32B 5/04, B32B 33/00

(54) **TRANSPORTBAND FÜR LEBENSMITTEL**
CONVEYOR BELT FOR FOODSTUFFS
BANDE TRANSPORTEUSE POUR DENREES ALIMENTAIRES

(30) Priorität: 04.06.1996 DE 29609848 U
(43) Veröffentlichungstag der Anmeldung: 14.04.1999
(73) Patentinhaber: Lohmann GmbH & Co. KG, 56567 Neuwied (DE)
(72) Erfinder: KÖHN, Hartmut, D-53560 Vettelschlo (DE); ZEIHSEL, Ulf, D-56269 Dierdorf (DE)
(74) Vertreter: Flaccus, Rolf-Dieter, Dr.
(86) Internationale Anmeldenummer: EP9702584
(87) Internationale Veröffentlichungsnummer: WO9746470

(56) Entgegenhaltungen:
- GB-A- 1 053 191
- US-A- 4 397 892
- US-A- 4 740 407

## Beschreibung

Die Erfindung betrifft ein Transportband für Lebensmittel, insbesondere zur Verwendung an Maschinen zur Aufbereitung von Lebensmitteln, wie solche beispielsweise bei Bäckerei-maschinen im Einsatz sind. Darüber hinaus soll die Erfindung auch Transportbänder betreffen, die an Maschinen zur Verarbeitung oder Aufbereitung anderer Lebensmittel in Süßwaren, Fleisch, Fisch oder dergleichen verarbeitenden Industriebetrieben verwendet werden.
Im beispielhaften Fall des Einsatzes eines Transportbandes bei Bäckereimaschinen für den Transport von Teigteilen, z.B. bei sogenannten Teigformmaschinen und Teigausstechmaschinen, ist es beim Stand der Technik üblich, Transportbänder aus Baumwollgeweben oder Baumwollfilzen zu verwenden. Die Bänder haben die Aufgabe, Teigteile aus Formen aufzunehmen und an Übergabestellen abzugeben. Sie werden an der Abgabestelle mit scharfer Umlenkung um Umlenkmesserkanten mit Radien von ca. 6 mm geführt.
Von Nachteil bei bisher verwendeten Transportbändern aus Baumwollgewebe oder Baumwollfilzen sind je nach Konsistenz der zu transportierenden Lebensmittelteile ein nicht befriedigendes Ablösevermögen an den Übergabestellen sowie eine nachteilig große Dehnung des Transportbandes aus Baumwollmaterial bereits nach wenigen Stunden oder Tagen der Inbetriebnahme, welche schließlich zur Unbrauchbarkeit des Bandes führen. Weiterhin ist infolge anhaftender Lebensmittelreste beispielsweise durch Öl, Fett, Zucker, Blut, Fleisch- oder Fischbestandteile die Voraussetzung für einen hygienisch äußerst bedenklichen Befall mit Bakterien gegeben. Diese finden in dem mit organischen Bestandteilen der transportierten Lebensmittel durchsetzten Baumwollmaterial einen Nährboden, um sich darin dauerhaft festzusetzen und zu vermehren. Hierdurch sind die hygienischen Bedingungen für eine Verwendung des Transportbandes im Lebensmittelbereich in Frage gestellt bzw. stark eingeschränkt. Dies führt weiterhin zu einem Abbau der zellulosehaltigen Fasern infolge Bakterienbefall und in der Folge zu erheblichen Festigkeitsverlusten des Bandes. Hinzu kommt, daß Transportbänder aus Baumwollmaterial ohne Binderrausrüstung, insbesondere für Bäckereimaschinen, individuell auf die jeweilige Maschine hinsichtlich ihrer Länge und Breite endlos hergestellt werden müssen. Dieser Herstellungsprozess ist zeitaufwendig und kostenintensiv, weshalb die vielfach unbefriedigend kurze Verfügbarkeit der Transportbänder als wesentlicher Nachteil empfunden wird.

Aus der US-A-3 998 986 und der US-A-4 744 843 sind Transportbänder zur Aufbereitung von Lebensmitteln bekannt, die aus einer oder mehreren Gummi- oder Elastomerschichten mit verstärkenden Gewebefäden oder -lagen gebildet sind. Hinsichtlich der mechanischen Festigkeit und ihrer Standzeit stellen diese Bänder eine Verbesserung dar, hinsichtlich anderer der genannten Nachteile jedoch nicht. Die US-A-3 998 986 offenbart ein luftundurchlässiges Transportband, das aus einer Gummi- oder Elastomerschicht und diese nach einem vorbestimmten Muster durchdringenden Gewebefäden zur mechanischen Verfestigung oder aus zwei Gummi- bzw. Elastomerschichten, zwischen denen eine oder mehrere Gewebelagen angeordnet und mit diesen verbunden sind, gebildet ist.
Die US-A-4 744 843 hat ein Verfahren zur Herstellung eines gewebeverstärkten Transportbandes zum Gegenstand. Dieses ist aus mehreren Schichten gebildet und weist zwischen zwei aus Polymerfasern bestehenden Bandlagen luftundurchlässige Schichten aus Elastomer und verstärkende Gewebeschichten auf. Die Struktur der Transportbänder ist aufwendig.

Ausgehend von diesem Stand der Technik liegt der Erfindung die Aufgabe zugrunde, ein wesentlich verbessertes Transportband für Lebensmittel, insbesondere zur Verwendung an Maschinen zur Aufbereitung von Lebensmitteln anzugeben, welches die vorgenannten Nachteile und Schwierigkeiten vermeidet, bei verringerten Herstellungskosten eine wesentlich längere Verfügbarkeit aufweist, das Einnisten bzw. Festsetzen von Bakterien verhindert oder stark reduziert und insbesondere bei Verwendung an Bäckerei-maschinen ein erheblich verbessertes Teigablösevermögen aufweist sowie eine schädliche Dehnung während des Betriebes zumindest signifikant reduziert.

Die Lösung der Aufgabe gelingt bei einem Transportband der eingangs genannten Art mit der Erfindung dadurch, daß es luftdurchlässig ist und im wesentlichen durch Nadelvliesstoff mit einer Imprägnierung durch ein Bindercompound gebildet wird. Nadelvliese sind lockere Materialien aus Spinnfasern oder Filamenten, die durch Vernadeln mit einem sogenannten Nadelbarren eine gewisse Verfestigung erfahren. Derartige lockere Gebilde werden durch relativ kurzzeitige Imprägnierung, insbesondere mit Latex, zu einem Material verarbeitet, das nicht in sich geschlossen und undurchlässig, sondern luftdurchlässig ist.

Mit großem Vorteil besitzt das erfindungsgemäße Transportband aufgrund der veloursartig geschlossenen Oberfläche und damit verbundener erheblich verringerter Gleitreibungszahl die Fähigkeit, Lebensmittelteile und insbesondere Teigteile an Übergabestellen der Maschine gut aufzunehmen und abzugeben. Durch die Herstellungsart mit Nadelvliesstoff, ausgerüstet mit einer Imprägnierung durch ein Bindercompound einer Kunststoffdispersion wird bei weiterhin erhaltener Elastizität eine hohe innere Festigkeit des Transportbandes erreicht, welche geringe Dehnung des Materials bei langen Standzeiten gewährleistet. Dies kann noch durch das Einbringen eines Zugträgers in Form eines Gewebes unterstützt werden.
Weil die Bestandteile des Transportmaterials, nämlich Fasern und Binder aus Kunststoffpolymeren bestehen, ist ein bakterieller Abbau ausgeschlossen und insgesamt das Einnisten bzw. Festsetzen von Bakterien reduziert. Dies wirkt sich positiv auf die hygienischen Bedingungen beim Einsatz bzw. Verwendung an Maschinen zur Aufbereitung von Lebensmitteln aus. Zudem ist dieses Material sowohl mit sauren als auch alkalischen Reinigungsmitteln wasch- und desinfizierbar.
Darüber hinaus kann das Transportbandmaterial als Rollenware gefertigt werden d.h. die aufwendige Endlosfertigung kann vermieden werden. Aus der Rollenware können dann kostengünstig und ohne längere Lieferzeiten Endlosbänder in individuellen Längen und Breiten konfektioniert und beispielsweise durch Fingerspleiß und/oder Verkleben ohne größeren Aufwand an Arbeit endlos gemacht werden.
In der verarbeitenden Lebensmittelindustrie können somit durch Modifikation des erfindungsgemäßen Produktes neue Anwendungsbereiche, außer in der Bäckereimaschinen-branche auch im Bereich beliebiger Lebensmittelverarbeitungen, wie beispielsweise für Fleisch, Süßwaren, Fischkonserven etc. erschlossen werden. Das erfindungsgemäße Transportband für Lebensmittel kann infolge der hohen Festigkeit bei weiterhin großer Elastizität problemlos für Anlagen mit Messerkantenbandumlenkung eingesetzt werden. Dabei sind kleine Umlenkradien, wie z.B. bis 6 mm, problemlos anwendbar.

Eine zweckmäßige Ausgestaltung sieht vor, daß die Imprägnierung bevorzugt eine Vollbadimprägnierung ist.

Diese gewährleistet bei vergleichsweise geringem Arbeitsaufwand eine homogene Verteilung des zur Imprägnierung verwendeten Bindercompound im Material des Transportbandes. Dabei besteht mit Vorteil der Nadelvliesstoff aus synthetischen, natürlichen und/oder regenerierten Fasern und bevorzugt aus PES (Polyester).

Weiterhin sieht die Erfindung vor, daß der Bindercompound aus natürlichem und/oder synthetischem Latex und insbesondere aus einem carboxylierten Butadien-Acrylnitril-Copolymeren besteht, was die Hydrophilie der Oberfläche bedingt.
Zweckmäßig beträgt dabei der Anteil an Bindercompound zwischen 40 und 90 Gew.-%, bevorzugt 75 Gew.-%. Entsprechend beträgt der Faseranteil zwischen 10 und
60 Gew.-%, bevorzugt 25 Gew.-%. Durch ein ausgewogenes Verhältnis an Bindercompound und Anteil an Fasern, sowie eines Gewebes aus Polyestermonofilamenten, können die erforderlichen Eigenschaften bezüglich Festigkeit und Elastizität in gewünschtem Ausmaß eingestellt werden.

Weiterhin sieht die Erfindung vor, daß das Transportband mit einer Kennzugkraft bei 1% Dehnung von ≥ 2 N/mm ausgebildet ist. Mit Vorteil sind die Flächen des Transportbandes hydrophil ausgebildet. Weiter ist mit Vorteil das Transportband beispielweise durch geeignete Wahl der Bestandteile auch ölbeständig ausgebildet. Durch die damit erzielbare weitgehend geschlossene Oberfläche infolge Luftdurchlässigkeit, Hydrophilität und Elastizität ist die Fähigkeit, Lebensmittel wie Teigteile an den Übergabestellen der Maschinen aufzunehmen bzw. abzugeben gegenüber dem Stand der Technik signifikant verbessert.Besonders bei einem Faser/Binder-Verhältnis von 1:3 wird eine hohe innere Festigkeit des Transportbandmaterials erreicht, welches bei geringer Dehnung im Betrieb lange Verfügbarkeit gewährleistet und dabei die Betriebs-kosten erheblich reduziert. Vor allen Dingen werden äußerst nachteilige Totzeiten durch Ausfall des Bandes vermieden.
Als geeignete Füllstoffe können in dem Transportband z.B. Kreide, Chinaclay, Tonerde und/oder Titandioxid enthalten sein. Geeignete Farbpigmente können sowohl organischer als auch anorganischer Natur sein.
Die Dicke des Transportbandes beträgt vorteilhaft 1- 3 mm, vorzugsweise 1,5 mm.

Im folgenden wird die Erfindung anhand eines Ausführungsbeispieles erläutert:

Nadelvliesstoff, bestehend aus Polyesterfasern mit einem Flächengewicht von ca. 330 g/m², im Foulard vollbadimprägniert mit einem wässrigen Bindercompound, bestehend aus carboxylierten Butadien- Acrylnitril-Copolymeren, enthaltend Füllstoff und/oder Farbstoffpigmente zur Farbgebung, wird mit einer bindertrockenen Auflage von 1000 g/m² bei Temperaturen im Bereich zwischen 100 und 140 °C getrocknet.
Nach dem Trocknungsprozess wird das vorgefertigte Band beidseitig mit Korund-Schleifmitteln, vorzugsweise der Körnung 120, auf eine Fertigdicke zwischen 1 und 3 mm, bevorzugt 1,5 mm, geschliffen. Die dabei entstehenden veloursartig glatten Flächen weisen weitgehend geschlossene Oberflächen auf, die zugleich luftdurchlässig, hydrophil und glatt sind und eine Gleitreibungszahl µ=0,22 aufweisen. Der Aufbau des erfindungsgemäßen Transportbandes umfaßt einen Nadelvliesstoff, bestehend aus 100 % Polyesterfasern mit einem Fasertiter von 1,7 dtex und einer Stapellänge von bevorzugt 40 mm, vernadelt mit einer Einstichdichte von 450 Einstichen/cm², mit einem Flächengewicht von beispielsweise 330 g/m², einem Gewebe, beispielsweise aus Polyester mit 160g/m², im Foulard mit einem wäßrigen Bindercompound vollbandimprägniert, bestehend beispielsweise aus 55 Gew.-% carboxylierten Butadien-Acrylnitril-Copolymeren, 42 Gew.-% Kreide als Füllstoff, 2,8 Gew.-% Farbstoffpigmente zur Farbgebung und 0,2 Gew.-% Dispergierhilfsmittel, mit einer Bindertrockenauflage von 1000 g/m² nach dem Trocknungsprozess beidseitig auf Fertigdicke geschliffen.

Das fertige Band zeichnet sich durch folgende Eigenschaften aus:
- Geschlossene Oberfläche, infolgedessen Vermeidung von Bakterienbefall und/oder Schimmelpilzen.
- Luftdurchlässigkeit, infolgedessen Verbesserung des Ablöseverhaltens der transportierten Lebensmittelteile
- hydrophile Oberfläche, förderlich für den Abtrocknungsvorgang und somit ebenfalls für ein verbessertes Ablöseverhalten.
- gute Reinigungsmöglichkeit, da abwaschbar und desinfizierbar.
- Fett- und Ölbeständigkeit.
- Dauertemperaturbeständigkeit bis ca. 100 °C.
- Erfüllung der gesetzlichen Normen für die Verwendung zum Lebensmitteltransport.

Das Transportband gemäß der Erfindung löst in optimaler Weise die eingangs gestellte Aufgabe.

## Patentansprüche

1. Transportband für Lebensmittel, insbesondere zur Verwendung an Maschinen zur Aufbereitung von Lebensmitteln, dadurch gekennzeichnet, daß es luftdurchlässig ist und im wesentlichen durch Nadelvliesstoff mit einer Imprägnierung duch ein Bindercompound gebildet wird.

2. Transportband nach Anspruch 1, dadurch gekennzeichnet, daß die Imprägnierung bevorzugt eine Vollbadimprägnierung ist.

3. Transportband nach Anspruch 1 oder 2, dadurch gekennzeichnet, daß der Nadelvliesstoff aus synthetischen, natürlichen und/oder regenerierten Fasern besteht.

4. Transportband nach Anspruch 3, dadurch gekennzeichnet, daß die Fasern bevorzugt aus PES bestehen.

5. Transportband nach einem oder mehreren der Ansprüche 1 bis 4, dadurch gekennzeichnet, daß der Nadelvliesstoff mindestens eine Lage eines Gewebes enthält.

6. Transportband nach einem oder mehreren der Ansprüche 1 bis 5, dadurch gekennzeichnet, daß der Bindercompound natürlichen und/oder synthetischen Latex und insbesonde ein carboxyliertes Butadien-Acrylnitril-Copolymer enthält.

7. Transportband nach einem oder mehreren der Ansprüche 1 bis 6, dadurch gekennzeichnet, daß der Anteil an Bindercompound zwischen 40 und 90 Gew.-% beträgt.

8. Transportband nach Anspruch 7, dadurch gekennzeichnet, daß der Anteil an Bindercompound bevorzugt 75 Gew.-% beträgt.

9. Transportband nach einem oder mehreren der Ansprüche 1 bis 8, dadurch gekennzeichnet, daß der Faseranteil zwischen 10 und 60 Gew.-% beträgt.

10. Transportband nach einem oder mehreren der Ansprüche 1 bis 9, dadurch gekennzeichnet, daß der Anteil an Fasern bevorzugt 25 Gew.-% beträgt.

11. Transportband nach einem oder mehreren der Ansprüche 1 bis 10, dadurch gekennzeichnet, daß es mit einer Kennzugkraft bei 1% Dehnung von ≥ 2 N/mm ausgebildet ist.

12. Transportband nach einem oder mehreren der Ansprüche 1 bis 11, dadurch gekennzeichnet, daß es hydrophil ausgebildet ist.

13. Transportband nach einem oder mehreren der Ansprüche 1 bis 12, dadurch gekennzeichnet, daß es ölbeständig ausgebildet ist.

14. Transportband nach einem oder mehreren der Ansprüche 1 bis 13, dadurch gekennzeichnet, daß es mindestens einseitig geschliffen ist.

## Claims

1. Conveyor belt for food, especially for use in machines for food treatment, characterized in that it is permeable to air and essentially made of a needle-punched nonwoven impregnated with a binder compound.

2. Conveyor belt according to claim 1, characterized in that the impregnation is preferably a full bath impregnation.

3. Conveyor belt according to claim 1 or 2, characterized in that the needle-punched nonwoven consists of synthetic, natural and/or regenerated fibers.

4. Conveyor belt according to claim 3, characterized in that the fibers preferably consist of PES.

5. Conveyor belt according to one or more of claims 1 to 4, characterized in that the needle-punched nonwoven contains at least one layer of a woven fabric.

6. Conveyor belt according to one or more of claims 1 to 5, characterized in that the binder compound contains natural and/or synthetic latex and especially a carboxylated butadiene-acrylonitrile copolymer.

7. Conveyor belt according to one or more of claims 1 to 6, characterized in that the proportion of binder compound is between 40 and 90%-wt.

8. Conveyor belt according to claim 7, characterized in that the proportion of binder compound is preferably 75%-wt.

9. Conveyor belt according to one or more of claims 1 to 8, characterized in that the proportion of fibers is between 10 and 60%-wt.

10. Conveyor belt according to one or more of claims 1 to 9, characterized in that the proportion of fibers is preferably 25%-wt.

11. Conveyor belt according to one or more of claims 1 to 10, characterized in that it has a characteristic tensile force of ≥ 2 N/mm at 1% elongation.

12. Conveyor belt according to one or more of claims 1 to 11, characterized in that it is hydrophilic.

13. Conveyor belt according to one or more of claims 1 to 12, characterized in that it is resistant to oil.

14. Conveyor belt according to one or more of claims 1 to 13, characterized in that it is emerized on at least one side.

## Revendications

1. Bande transporteuse pour denrées alimentaires, en particulier destinée à être utilisée sur des machines de préparation de denrées alimentaires, caractérisée en ce qu'elle est perméable à l'air et qu'elle est essentiellement formée d'un feutre aiguilleté doté d'une imprégnation par un composé de liant.

2. Bande transporteuse selon la revendication 1, caractérisée en ce que l'imprégnation est de préférence une imprégnation en plein bain.

3. Bande transporteuse selon les revendications 1 ou 2, caractérisée en ce que le feutre aiguilleté est constitué de fibres synthétiques, naturelles et/ou régénérées.

4. Bande transporteuse selon la revendication 3, caractérisée en ce que les fibres sont de préférence constituées de PES.

5. Bande transporteuse selon l'une ou plusieurs des revendications 1 à 4, caractérisée en ce que le feutre aiguilleté contient au moins une couche d'un tissu.

6. Bande transporteuse selon l'une ou plusieurs des revendications 1 à 5, caractérisée en ce que le composé de liant contient du latex naturel et/ou synthétique et en particulier un copolymère carboxylé de butadiène-acrylonitrile.

7. Bande transporteuse selon l'une ou plusieurs des revendications 1 à 6, caractérisée en ce que la teneur en composé de liant est de 40 à 90 % en poids.

8. Bande transporteuse selon la revendication 7, caractérisée en ce que la teneur en composé de liant est de préférence de 75 % en poids.

9. Bande transporteuse selon l'une ou plusieurs des revendications 1 à 8, caractérisée en ce que la teneur en fibres est de 10 à 60 % en poids.

10. Bande transporteuse selon l'une ou plusieurs des revendications 1 à 9, caractérisée en ce que la teneur en fibres est de préférence de 25 % en poids.

11. Bande transporteuse selon l'une ou plusieurs des revendications 1 à 10, caractérisée en ce qu'elle est configurée avec une force nominale de traction de ≥ 2 N/mm à un allongement de 1 %.

12. Bande transporteuse selon l'une ou plusieurs des revendications 1 à 11, caractérisée en ce qu'elle est rendue hydrophile.

13. Bande transporteuse selon l'une ou plusieurs des revendications 1 à 12, caractérisée en ce qu'elle est rendue résistante aux huiles.

14. Bande transporteuse selon l'une ou plusieurs des revendications 1 à 13, caractérisée en ce qu'elle est polie sur au moins une face.
